# EUROPEAN PATENT SPECIFICATION

(11) **EP 4 502 435 B1**
(45) Date of publication and mention of the grant of the patent: **29.07.2026**
(21) Application number: 22935532.6
(22) Date of filing: 31.03.2022
(51) Int. Cl.: F16K 7/14, F16K 27/02, F16K 25/00, F16K 31/00

(54) **FLOW RATE CONTROL VALVE**
DURCHFLUSSREGELVENTIL
VANNE DE RÉGULATION DE DÉBIT

(43) Date of publication of application: 05.02.2025
(73) Proprietor: Kofloc Corp., Kyotanabe-shi, Kyoto 610-0311 (JP); Yohwa Co., Ltd., Kitakyushu-shi, Fukuoka 800-0231 (JP)
(72) Inventor: SHINMURA, Hidenobu, Kyotanabe-shi, Kyoto 610-0311 (JP); KIDO, Keiji, Kyotanabe-shi, Kyoto 610-0311 (JP); NOGUCHI, Michitaka, Kyotanabe-shi, Kyoto 610-0311 (JP); FUKUDA, Masaru, Kitakyushu-shi, Fukuoka 800-0231 (JP); TSUTSUMI,, Ryosuke, Kitakyushu-shi, Fukuoka 800-0231 (JP)
(74) Representative: Kraus & Lederer PartGmbB
(86) International application number: PCT/JP2022/016885
(87) International publication number: WO 2023/188394

(56) References cited:
- JP-A- 2001 027 333
- JP-A- 2009 222 189
- JP-A- 2011 214 627
- JP-A- 2020 200 840
- JP-A- 2022 039 472
- US-A1- 2009 146 095
- US-A1- 2009 242 818

## Description

### TECHNICAL FIELD

The present invention relates to a flow rate control valve, especially to a flow rate control valve capable of reducing the occurrence of contamination or fine foreign materials (dust) in a fluid for use in semiconductor production or the like, and capable of performing high-speed control of a minute flow rate.

### BACKGROUND ART

Semiconductor production or the like requires quite high cleanliness in fluids such as pure water for washing silicon wafers and a chemical for etching process. More specifically, due to the further improvement in very large-scale integration and fine fabrication in semiconductor production, the International Technology Roadmap for Semiconductors (ITRS) has stipulated that the process would be 32-nm process in 2015. The number (here, 32 nm) denoted in the name of the process is defined as a half (half-pitch) of the narrowest pitch (line width + line interval) on the lowest layer in an MPU. With such defined line widths, product yield would be significantly influenced when a fluid flow path in the semiconductor production process is contaminated with contaminants or with fine dust (particles). Because it is necessary that the sizes of particles do not exceed a quarter of the line pitch (8 nm in the case of the process in 2015), a member for allowing a fluid to flow while keeping the cleanliness of the fluid plays a significant role.

For example, a flow rate control valve with a conventional structure is disclosed in Fig. 5 (see Patent literature 1). The flow rate control valve 100 includes a flow introduction section 101 and a flow discharge section 102 for a controlled fluid, a valve chamber body section 105 having a valve chamber 104 provided with a seat section 103 between the flow introduction section and the flow discharge section, and a valve mechanism section 108 including a valve section 106 configured to be movable back and forth to seal the seat section 103, and a diaphragm section 107 attached inside the valve chamber 104. A driving mechanism 110 configured to perform driving control for opening and closing the seat section 103 by moving the valve mechanism section 108 back and forth by actuation air flowing in and out via an air port 109 is accommodated in a housing body section 111 located on the valve chamber body section 105. The driving mechanism 110 includes a piston section 113 being connected with the valve mechanism section 108 and having a pressure receiving section 112 configured to receive the actuation air flowed in via the air port 109, and a spring 114 configured to bias the piston section 113 toward the seat section 103. In the figure, the reference sign 115 indicates a breathing hole and the reference sign 116 indicates a piston space section.

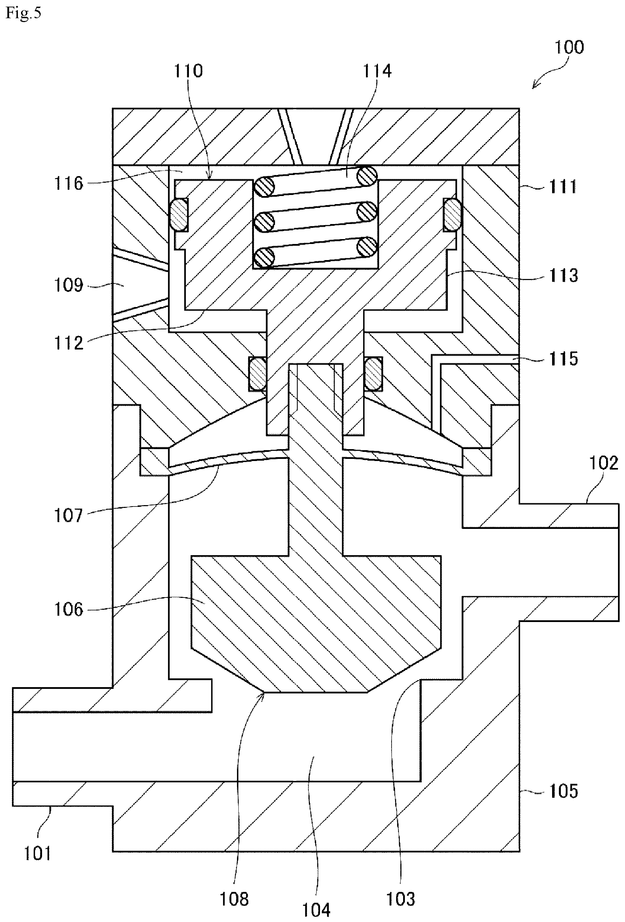

The flow rate control valve illustrated in Fig. 5 is in such a state that the valve section is off from the seat section, allowing the controlled fluid to flow therebetween. When a supply pressure of the actuation air from the air port 109 is reduced in this state, the pressure applied on the pressure receiving section 112 of the piston section 113 is consequently reduced. Consequently, the biasing force of the spring 114 exceeds the pressure of the actuation air flowing in, thereby lowering down the piston section 113. In this way, the valve section 106 is seated on the seat section 103 via the action of the valve mechanism section 108.

The flow rate control valve 100 of Fig. 5 is such that the members such as the valve section 106 and the seat section 103 are made of fluororesin such as PTFE (polytetrafluoroethylene) in general and machined into prescribed shapes. PTFE with high chemical resistance and high cleanliness is widely employed in semiconductor production facilities. However, as understood from the structure of the fluid control valve 100, for completely stopping the flow of the controlled fluid, the valve section 106 is seated on the seat section 103, that is, the valve section 106 and the seat section 103 abut each other. Thus, along long-term usage of the fluid control valve, the valve section and the seat section are both worn away. Due to the structure of the valve, it is difficult to avoid occurrence of particles peeled off from the worn portions.

However, as addressed in the aforementioned roadmap and the like, even such particles finer than the conventional standards are considered as problematic at present and therefore countermeasures for such particles have been more demanded. The flow rate control valve with the conventional structure cannot provide satisfactory particle occurrence reduction required due to the new standards. Therefore, a flow rate control vale with a new structure for such particle occurrence reduction has been demanded.

### CITATION LIST

### PATENT LITERATURE

Patent literature 1: JP Patent No. 3590572
Patent literature 2: US 2009/242818 A1

Patent literature 2 generally relates to valves, and more specifically to diaphragm valves having welded components. Patent literature 2 states the following in paragraph [0021] : "Diaphragm assembly 14 may be welded to valve body 12 by any appropriate technique including, for example, ultrasonic welding, friction welding, vibration welding, heat welding, fusion welding, and combination thereof."

### SUMMARY OF INVENTION

### TECHNICAL PROBLEM

The present invention was made to solve this problem in the conventional art. An object of the present invention is thus to provide a flow rate control valve capable of reducing the occurrence of contamination of a controlled fluid with particles thereby to maintain high cleanliness the controlled fluid, and capable of performing high-speed control of a minute flow rate.

### SOLUTION TO PROBLEM

To solve the aforementioned problem, a flow rate control valve of the present invention is a flow rate control valve for controlling a flow rate of a fluid, including: a valve block; a diaphragm; and an actuator, wherein by a minute pressure received on the diaphragm from the actuator, the fluid that has flowed in one flow path provided in the valve block is discharged via a space between an inside surface of the valve block and an inside surface of the diaphragm from another flow path provided in the valve block, and wherein a peripheral portion of the diaphragm and an upper edge surface of the valve block is integrated with each other by being welded together in such a way that an inner peripheral surface of the diaphragm and an inner peripheral surface of the valve block are flush with each other without a level difference or a gap therebetween in a welded portion in which the peripheral portion of the diaphragm and the upper edge surface of the valve block are welded together, wherein the welding is performed by introducing the diaphragm and the valve block in a heating furnace under atmospheric environment.

### ADVANTAGEOUS EFFECTS OF INVENTION

The flow rate control valve of the present invention is configured such that a flow path for a fluid is formed with a diaphragm and a valve block and the flow path is such that a peripheral portion of the diaphragm and an upper edge surface of the valve block are integrated with each other by being welded together in such a way that an inner peripheral surface of the diaphragm and an inner peripheral surface of the valve block are flush with each other without a level difference or a gap therebetween in a welded portion in which the peripheral portion of the diaphragm and the upper edge surface of the valve block are welded together. With this configuration, the welded portion will not be a cause of the generation of foreign materials therefrom or of accumulation or retaining of foreign materials thereat, thereby making it possible to maintain high cleanliness of a controlled fluid.

### BRIEF DESCRIPTION OF DRAWINGS

Fig. 1(a) is a schematic structural view illustrating a vertical cross-section of a flow rate control valve of the present invention according to one embodiment (normally closed type), and Fig. 1(b) is a plan view thereof.
Fig. 2 is a view illustrating one embodiment of a shape of a welded portion where a diaphragm and a valve block are welded together.
Fig. 3 is a view schematically illustrating one embodiment of a temperature pattern and a pressure pattern in welding the diaphragm and the valve block together.

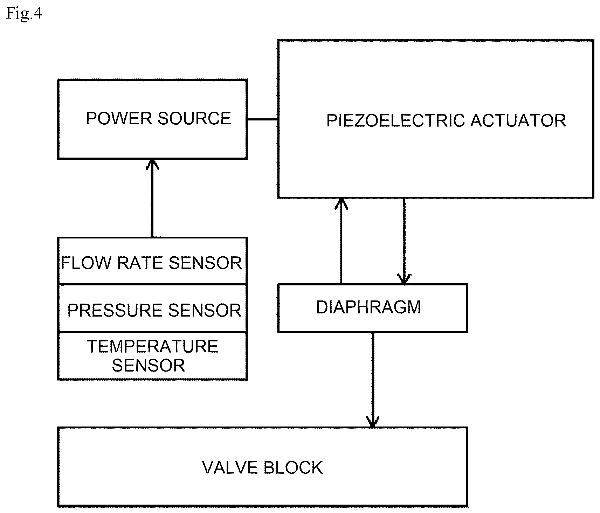

Fig. 4 is a schematic block diagram illustrating one embodiment of a control method of the flow rate control valve of the present invention.
Fig. 5 is a vertical cross-sectional view illustrating an open state of a check valve described in Patent literature 1.

### DESCRIPTION OF EMBODIMENTS

The present invention will be described in detail below based on various embodiments. The embodiments described below are provided for illustration purposes only, and the present invention is not limited thereto. Various alterations and modifications are possible within the technical scope of the present invention.

In the present invention, an actuator may be a piezoelectric actuator. Piezoelectric effect is a phenomenon that has been known for a long time and is such a phenomenon that when a mechanical pressure is applied on a crystal, an electric charge occurs on a surface of a piezoelectric element proportionally to the pressure thus applied. The piezoelectric effect is a reversible phenomenon and inverse piezoelectric effect is utilized in the piezoelectric actuator. That is, a piezoelectric element is provided with electrodes thereon, so that the piezoelectric element generates an electric field inside thereof under voltage application via the electrodes, and this electric field generation causes the piezoelectric element to extend. The electric field applied in a direction parallel to the polarization direction of the piezoelectric element crystals causes a rotational force in electric dipoles arranged in a linear alignment, thereby causing a strong torque. This changes the lengths of the crystals, thereby causing crystal extension. The change in the length of the piezoelectric element appears as a very subtle change in extension of the length of nanometer scale by and according to a change in the voltage application. The piezoelectric actuator has the fastest responding speed among various actuators, and the extension speed of the piezoelectric actuator has an acceleration several thousand times faster than a gravitational acceleration. Thus, the piezoelectric actuator is preferable as the actuator for the flow rate control valve of the present invention.

The measured fluid may be a corrosive liquid used as a washing liquid for an industrial device. Because the pure water for washing silicon wafers and the chemical for the etching process used in the semiconductor production and the like are corrosive liquids, it is preferable that constitutional materials of the flow rate control valve for use in semiconductor production devices be materials resistant to such corrosive liquids.

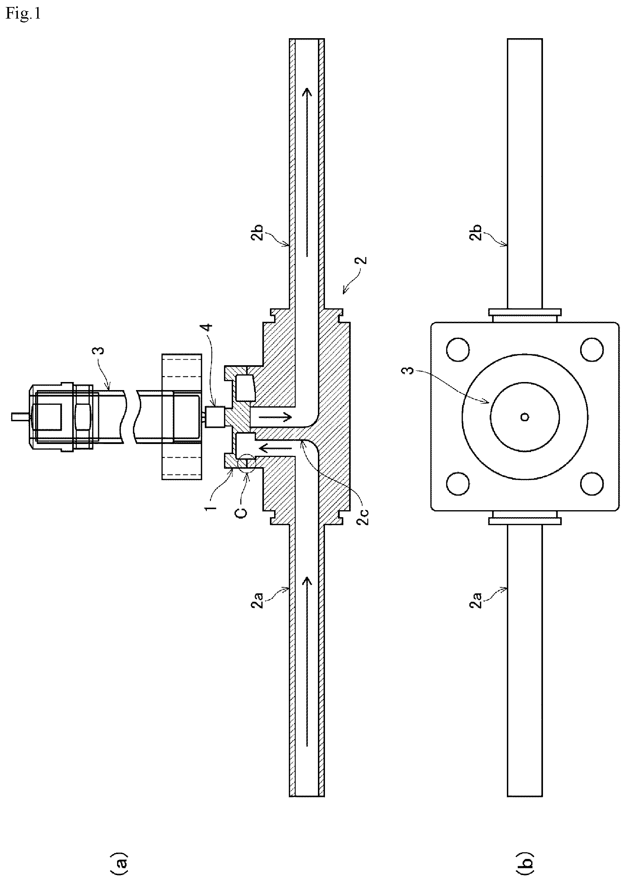

Fig. 1(a) is a schematic structural view illustrating a vertical cross-section of a flow rate control valve of the present invention according to one embodiment (normally closed type), and Fig. 1(b) is a plan view thereof. The reference sign 1 indicates a diaphragm, the reference sign 2 indicates a valve block, the reference sign 3 indicates a piezoelectric actuator, and the reference sign 4 indicates an input and output end of the piezoelectric actuator 3. The input and output end 4 is connected with the diaphragm 1. The fluid that has flowed in one flow path provided in an upstream portion 2a of the valve block 2 (as indicated by the rightwards arrow in Fig. 1(a)) can be discharged as a result of expansion and contraction of the diaphragm 1, which are caused by and according to a minute pressure that is applied by the input and output end 4 of the piezoelectric actuator 3 on the diaphragm 1, causing the fluid to flow from the flow path in the upstream portion 2a of the valve block 2 (as indicated by the rightwards arrow in Fig. 1(a)) to a flow path in a downstream portion 2b of the valve block 2 (as indicated by the rightwards arrow in Fig. 1(a)) via a space between an inside surface of the valve block 2 and an inside surface of the diaphragm 1. The actuator for actuating the flow rate control valve of the present invention is not limited to the piezoelectric actuator and may be an electric actuator such as a linear direct current motor, a linear synchronous motor, a linear induction motor, or a linear stepping motor, a hydraulic actuator such as a hydraulic cylinder, a pneumatic actuator such as a pneumatic cylinder, or the like. That is, the actuator can be any actuator capable of providing a linear action to an operating device according to a signal outputted from a control device.

In case where the flow rate control valve of the present invention is employed in a semiconductor production device, it is preferable that the material(s) constituting the diaphragm 1 and the valve block 2 be a chemical-resistant material(s) (material(s) resistant to a corrosive liquid). The chemical-resistant material(s) may be preferably fluororesin such as PFA (perfluoroalkoxyalkane) or PTFE (polytetrafluoroethylene), which are excellent in acid resistance, alkali resistance, and organic solvent resistance. Further, for the sake of functions required for the diaphragm 1 and the valve block 2, it is preferable that the diaphragm 1 be excellent in wear resistance, flexibility, chemical permeation resistance, and weldability. Therefore, it is more preferable that the material of the diaphragm 1 be modified PTFE or PFA.

The modified PTFE preferable as the material of the diaphragm 1 may be, for example, a fluororesin (such as "PTFE M-112" available from Daikin Industries, Ltd.), whose average particle diameter is 20 µm, apparent density is 360 g/L, specific gravity is 2.15, tensile strength is 48 MPa, elongation is 400%, contraction percentage is 3.8%, melting point is 339°C, and flex life is 2.7 × 10⁷ times (MIT test, ASTM D2178).

In the present invention, it is quite important that a peripheral portion of the diaphragm 1 and an upper edge surface of the valve block 2 are integrated with each other by being welded together (see the portion surrounded by the small circle indicated by the letter C in Fig. 1(a)) in such a way that an inner peripheral surface of the diaphragm 1 and an inner peripheral surface of the valve block 2 are flush with each other without a level difference or a gap therebetween in the welded portion. The welded portion can be formed as below, for example.

### (1) Formation of Diaphragm 1 and Valve Block 2

As the material(s) of the diaphragm 1 and the valve block 2, PTFE, modified PTFE, or PFA may be usable, however, in the consideration that the flex life of the diaphragm 1 directly determines the life of the valve, the material of the diaphragm 1 may be preferably modified PTFE excellent in flexibility and weldability, or may be preferably PFA for the sake of the chemical permeation resistance and wear resistance. Moreover, the diaphragm 1 may be made mainly of one of modified PTFE or PFA (for example, modified PTFE) and partially of the other one of modified PTFE or PFA (for example, PFA). The valve block 2 may be made of any one of PTFE, modified PTFE, or PFA in consideration of productivity. Moreover, the valve block 2 may be made mainly of any one of PTFE, modified PTFE, or PFA (for example, PTFE), and partially of any one of the rest two of PTFE, modified PTFE, or PFA (for example, PFA). To obtain the diaphragm 1 and the valve block 2 with the cross-sectional shapes illustrated in Fig. 1(a), machining is adoptable for PTFE and modified PTFE, while injection molding and machining are adoptable for PFA.

### (2) Prefabrication of Surfaces to be Welded

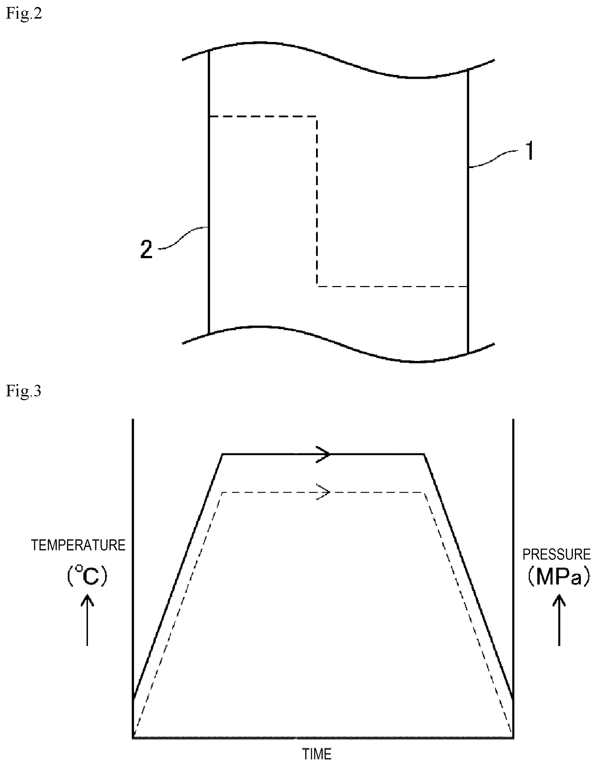

The peripheral portion of the diaphragm 1 and the upper edge surface of the valve block 2, which are surfaces to be welded together at the welded portion indicated by the letter C in Fig. 1(a), are processed by precision-machining, so that the peripheral portion of the diaphragm 1 and the upper edge surface of the valve block 2 are 0.2 µm or less in arithmetic average roughness (Ra) and 0.8 µm or less in maximum height (Ry). Moreover, for the sake of securing both the accuracy in positioning of the welding and the strength of the welding, the welding portions of the diaphragm 1 and the valve block 2 are shaped as illustrated in Fig. 2. That is, as indicated by the dotted line in Fig. 2, the diaphragm 1 and the valve block 2 are prefabricated in the shapes that engage with each other, thereby making it possible to weld the diaphragm 1 and the valve block 2 together without a level difference or a gap therebetween. In the present invention, the welding of the diaphragm 1 and the valve block 2 as described below can be performed without using an adhesive or a bonding member to perform the welding. Thus, no impurities will be eluted out at the welded portion.

### (3) Welding of Diaphragm 1 and Valve Block 2

According to the claimed invention, the welding of the diaphragm 1 and the valve block 2 thus obtained as above is performed by a method in which the welding is performed by introducing the diaphragm 1 and the valve block 2 in a heating furnace under atmospheric environment (which will be referred to as the former heating method) According to an example not forming part of the claimed invention, the welding is performed by a method in which the welding is performed by locally heating the peripheral portion of the diaphragm 1 and the upper edge surface of the valve block 2 (which will be referred to as the latter heating method). The former heating method is performed at a temperature exceeding the melting point of the material(s) under a pressure of about 30 MPa at maximum for a heating time of about 200 minutes at maximum, while these conditions would be changed as appropriate depending on how large the material(s) is/are in size. The latter heating method is performed at a temperature exceeding the melting point of the material(s) under a pressure of about 1.0 MPa for a heating time of about 10 minutes, while these conditions would be changed as appropriate depending on how large the material(s) is/are in size. One example of patterns of temperature and pressure in a heating furnace is illustrated in Fig. 3. In Fig. 3, the solid line represents the temperature inside the furnace and the broken line represents the pressure inside the furnace. After the peripheral portion of the diaphragm 1 and the upper edge surface of the valve block 2 are welded together by heating in the heating furnace, the diaphragm 1 and the valve block 2 are subjected to the precision-machining. The inner peripheral surface of the diaphragm 1 and the inner peripheral surface of the valve block 2 thus obtained are such that the inner peripheral surface of the diaphragm 1 and the inner peripheral surface of the valve block 2 are flush with each other without a level difference nor a gap therebetween. Therefore, the welded portion will not be a cause of the generation of foreign materials therefrom or of accumulation or retaining of foreign materials thereat.

Next, an operation of the flow rate control valve of the present invention will be described.

### (1) Initial Purging

Before starting flow rate control, the entire flow paths including the flow paths illustrated in Fig. 1(a) are washed with pure water flowed therethrough.

### (2) Flow Rate Control

Fig. 1(a) illustrates flow rate control for normally closed type. Electrodes (not illustrated) are connected with the piezoelectric actuator 3 illustrated in Fig. 1(a), and voltage application via the electrodes generates an electric field inside the piezoelectric actuator 3, thereby causing the input and output end 4 of the piezoelectric actuator 3 to retreat slightly toward the piezoelectric actuator 3, so that the action of the input and output end 4 forms the a minute space between the diaphragm 1 and a protrusion portion 2c provided inside the valve block 2 and between the diaphragm 1 and the downstream portion 2b of the valve block 2, thereby allowing the fluid to flow from the upstream portion 2a of the valve block 2 to the downstream portion 2b of the valve block 2. That is, in Fig. 1(a) illustrating the case of the normally closed type, the retreat of the input and output end 4 slightly toward the piezoelectric actuator 3 forms the minute space between the diaphragm 1 and the protrusion portion 2c provided inside the valve block 2 and between the diaphragm 1 and the downstream portion 2b of the valve block 2. Because a sprig is provided in the piezoelectric actuator 3 in order to extend the input and output end 4 away from the piezoelectric actuator 3, the retreat of the input and output end 4 toward the piezoelectric actuator 3 will not occur while the force of the retreat is not greater than the force of the spring. Therefore, by increasing and decreasing the strength of the electric field generated inside the piezoelectric actuator 3, the flow rate of the fluid flowing via the minute space can be adjusted. If the strength of the electric field generated inside the piezoelectric actuator 3 is smaller than the force of the spring, the input and output end 4 tends to return to its original position, so that the minute space will not be formed between the diaphragm 1 and the protrusion portion 2c provided inside the valve block 2 and between the diaphragm 1 and the downstream portion 2b of the valve block 2, thereby closing the flow path for the fluid, so that the fluid will not flow from the upstream portion 2a of the valve block 2 to the downstream portion 2b of the valve block 2.

Flow rate control for a normally opened type may be carried out as below. In the case of the normally opened type, there is a minute space between the diaphragm 1 and the protrusion portion 2c provided inside the valve block 2 and between the diaphragm 1 and the downstream portion 2b of the valve block 2 in the state as illustrated in Fig. 1(a). In such a configuration, electrodes (not illustrated) are connected with the piezoelectric actuator 3 illustrated in Fig. 1(a), and voltage application via the electrodes generates an electric field inside the piezoelectric actuator 3, thereby causing the input and output end 4 of the piezoelectric actuator 3 to extend, so that the action of the input and output end 4 closes the minute space between the diaphragm 1 and the protrusion portion 2c provided inside the valve block 2 and between the diaphragm 1 and the downstream portion 2b of the valve block 2 (as illustrated in Fig. 1(a)), thereby not allowing the fluid to flow from the upstream portion 2a of the valve block 2 to the downstream portion 2b of the valve block 2. Because a sprig is provided in the piezoelectric actuator 3 in order to retreat the input and output end 4 toward the piezoelectric actuator 3, the extension of the input and output end 4 will not occur while the force of extension is not greater than the force of the spring. Therefore, if the strength of the electric field generated inside the piezoelectric actuator 3 is smaller than the force of the spring, the input and output end 4 tends to return to its original position, so that the minute space will be formed between the diaphragm 1 and the protrusion portion 2c provided inside the valve block 2 and between the diaphragm 1 and the downstream portion 2b of the valve block 2, thereby allowing the fluid to flow from the upstream portion 2a of the valve block 2 to the downstream portion 2b of the valve block 2. Therefore, by increasing and decreasing the strength of the electric field generated inside the piezoelectric actuator 3, the flow rate of the fluid flowing through the minute space can be adjusted.

A flow path upstream to the upstream portion 2a of the valve block 2 and a flow path downstream to the downstream portion 2b thereof are provided with a flow rate sensor, a pressure sensor, and a temperature sensor for sensing the flow rate, pressure, and temperature of the fluid, respectively, and feedback of signals from these sensors to the electrodes (not illustrated) is performed. Depending on the signals fed back from the flow rate sensors, the pressure sensors, and the temperature sensors, the strength of electric fields to be generated inside the piezoelectric actuator 3 are different.

### (3) Feedforward control

The flow rate control valve of the present invention may employ feedforward control. That is, if the flow rate of the fluid flowing from the upstream portion 2a of the valve block 2 to the downstream portion 2b of the valve block 2 becomes greater than a predetermined target value because the minute space between the diaphragm 1 and the protrusion portion 2c provided inside the valve block 2 and between the diaphragm 1 and the downstream portion 2b of the valve block 2 has an opening area greater than a predetermined reference value, it is determined to perform feedforward control. That is, if the flow rate sensed by the flow rate sensor provided in the flow path provided downstream to the downstream portion 2b of the valve block 2 becomes greater than the target value, a change amount of the flow rate is calculated out based on a deviation value between the target value and the actual flow rate, and the flow rate is set according to the change amount. The feedforward control controls the flow rate in such a way that the flow rate after the control will be smaller than the current flow rate.

### (4) Sequence control

The flow rate control valve of the present invention may employ sequence control. That is, sequence control may be implemented therein by configuring such that the flow rate sensors, the pressure sensors, and the temperature sensors as described in Paragraph [0024] , and the piezoelectric actuator 3, and a sequence control device are provided, the sequence control device including a facility control sequence configured to receive operation states reported from the sensors and to output a control command to the piezoelectric actuator 3 according to a control logic, and a sequence control mechanism configured to output an activation signal periodically, the facility control sequence dividedly including a plurality of control steps, which define a time width and a degree of opening of the flow rate control valve, the control logic being constituted by a program combining the plurality of control steps with execution registers and control operation output sections correspondingly, and a proceeding control mechanism being provided, which is constituted by a program describing a flow in order to control proceeding of the plurality of control steps according to control operation conditions and to decide an execution register correspondingly to the execution steps.

### INDUSTRIAL APPLICABILITY

As described above, the flow rate control valve of the present invention is usefully applicable to various industrial fields in which flow rate control is necessary, and especially usefully applicable to flow rate control of a fluid for use in a semiconductor production device.

### REFERENCE SIGNS LIST

1 Diaphragm
2 Valve block
3 Piezoelectric actuator
4 Input and output end of piezoelectric actuator

## Claims

1. A flow rate control valve for controlling a flow rate of a fluid, comprising:
a valve block (2);
a diaphragm (1); and
an actuator (3),
wherein by a minute pressure received on the diaphragm from the actuator, the fluid that has flowed in one flow path provided in the valve block is discharged via a space between an inside surface of the valve block (2) and an inside surface of the diaphragm (1) from another flow path provided in the valve block (2), and
wherein a peripheral portion of the diaphragm (1) and an upper edge surface of the valve block (2) is integrated with each other by being welded together in such a way that an inner peripheral surface of the diaphragm (1) and an inner peripheral surface of the valve block (2) are flush with each other without a level difference or a gap therebetween in a weld portion in which the peripheral portion of the diaphragm (1) and the upper edge surface of the valve block (2) are welded together, **characterized in that** the welding is performed by introducing the diaphragm (1) and the valve block (2) in a heating furnace under atmospheric environment.

2. The flow rate control valve according to claim 1, wherein the diaphragm (1) and the valve block (2) which are welded are prefabricated in the shapes that engage with each other and without a level difference or a gap therebetween.

3. The flow rate control valve according to claim 1 or 2, wherein the valve block (2) is made from PTFE, modified PTFE, or PFE, and the diaphragm is made from modified PTFE or PFA

4. The flow rate control valve according to claim 3, wherein the actuator (3) is a piezoelectric actuator.

## Patentansprüche

1. Durchflussregelventil zum Regulieren eines Durchflusses eines Fluids, umfassend:
einen Ventilblock (2);
eine Membran (1); und
einen Aktuator (3),
wobei durch einen geringen Druck, der von dem Aktuator auf die Membran ausgeübt wird, das Fluid, das in einen in dem Ventilblock vorgesehenen Strömungsweg eingeströmt ist, über einen Zwischenraum zwischen einer Innenfläche des Ventilblocks (2) und einer Innenfläche der Membran (1) aus einem anderen in dem Ventilblock (2) vorgesehenen Strömungsweg ausgeleitet wird, und
wobei ein Randbereich der Membran (1) und eine obere Kantenfläche des Ventilblocks (2) dadurch miteinander verbunden sind, dass sie so miteinander verschweißt sind, dass eine innere Umfangsfläche der Membran (1) und eine innere Umfangsfläche des Ventilblocks (2) in einem Schweißbereich, in dem der Randbereich der Membran (1) und die obere Kantenfläche des Ventilblocks (2) miteinander verschweißt sind, bündig zueinander sind, ohne einen Höhenunterschied oder einen Spalt zwischen ihnen aufzuweisen, **dadurch gekennzeichnet, dass** das Schweißen durchgeführt wird, indem die Membran (1) und der Ventilblock (2) in einem Heizofen unter atmosphärischen Bedingungen eingebracht werden.

2. Durchflussregelventil nach Anspruch 1, wobei die Membran (1) und der Ventilblock (2), die miteinander verschweißt sind, in Formen vorgefertigt sind, die ineinandergreifen und ohne einen Höhenunterschied oder einen Spalt zwischen ihnen.

3. Durchflussregelventil nach Anspruch 1 oder 2, wobei der Ventilblock (2) aus PTFE, modifiziertem PTFE oder PFE besteht und die Membran aus modifiziertem PTFE oder PFA besteht.

4. Durchflussregelventil nach Anspruch 3, wobei der Aktuator (3) ein piezoelektrischer Aktuator ist.

## Revendications

1. Vanne de régulation de débit destinée à réguler le débit d'un fluide, comprenant :
un bloc de vanne (2) ;
un diaphragme (1) ; et
un actionneur (3),
dans laquelle, sous l'effet d'une petite pression exercée sur le diaphragme par l'actionneur, le fluide qui s'est écoulé dans un trajet d'écoulement prévu dans le bloc de vanne est évacué via un espace entre une surface interne du bloc de vanne (2) et une surface interne du diaphragme (1) depuis un autre trajet d'écoulement prévu dans le bloc de vanne (2), et
dans laquelle une partie périphérique du diaphragme (1) et une surface d'extrémité supérieure du bloc de vanne (2) sont intégrées l'une à l'autre par soudage de telle sorte qu'une surface périphérique interne du diaphragme (1) et une surface périphérique interne du bloc de vanne (2) affleurent l'une l'autre sans différence de niveau ni d'espace entre elles dans une partie soudée où la partie périphérique du diaphragme (1) et la surface du bord supérieur du bloc de vanne (2) sont soudées ensemble, **caractérisée en ce que** le soudage est effectué en introduisant le diaphragme (1) et le bloc de vanne (2) dans un four de chauffage en milieu atmosphérique.

2. Vanne de régulation de débit selon la revendication 1, dans laquelle le diaphragme (1) et le bloc de vanne (2) qui sont soudés sont préfabriqués dans les formes qui s'emboîtent l'une dans l'autre et sans différence de niveau ni d'espace entre elles.

3. Vanne de régulation de débit selon la revendication 1 ou 2, dans laquelle le bloc de vanne (2) est fabriqué en PTFE, en PTFE modifié ou en PFE, et le diaphragme est fabriquée en PTFE modifié ou en PFA.

4. Vanne de régulation de débit selon la revendication 3, dans laquelle l'actionneur (3) est un actionneur piézoélectrique.
